# EUROPÄISCHE PATENTSCHRIFT

(11) **EP 3 063 811 B1**
(45) Veröffentlichungstag und Bekanntmachung des Hinweises auf die Patenterteilung: **06.12.2017**
(21) Anmeldenummer: 14802327.8
(22) Anmeldetag: 27.10.2014
(51) Int. Cl.: H01M 4/04, C01B 17/22, H01M 4/1397, H01M 4/136, H01M 4/36, H01M 4/58, H01M 10/052, H01M 4/1393, C23C 16/44, H01B 1/12, C23C 18/12, H01B 1/10, H01M 4/62, H01M 10/0525, H01M 4/02

(54) **KOHLENSTOFFBESCHICHTETES LITHIUMSULFID**
CARBON-COATED LITHIUM SULPHIDE
SULFURE DE LITHIUM REVÊTU DE CARBON

(30) Priorität: 28.10.2013 DE 102013111853
(43) Veröffentlichungstag der Anmeldung: 07.09.2016
(73) Patentinhaber: Albemarle Germany GmbH, 65926 Frankfurt am Main (DE); Volkswagen Aktiengesellschaft, 38436 Wolfsburg (DE)
(72) Erfinder: DE VRIES, Henrik, 48147 Münster (DE); JEONG, Sangsik, 89075 Ulm (DE); PASSERINI, Stefano, 89081 Ulm (DE)
(74) Vertreter: Fitzner, Uwe
(86) Internationale Anmeldenummer: PCT/EP2014/072949
(87) Internationale Veröffentlichungsnummer: WO 2015/063007

(56) Entgegenhaltungen:
- WO-A1-2012/084878
- WO-A1-2013/057023
- US-A1- 2011 171 537
- LIANG ZHAO ET AL: "Porous Li4Ti5O12 Coated with N-Doped Carbon from Ionic Liquids for Li-Ion Batteries", ADVANCED MATERIALS, Bd. 23, Nr. 11, 18. März 2011 (2011-03-18) , Seiten 1385-1388, XP055158208, ISSN: 0935-9648, DOI: 10.1002/adma.201003294
- JENS PETER PARAKNOWITSCH ET AL: "Functional Carbon Materials From Ionic Liquid Precursors", MACROMOLECULAR CHEMISTRY AND PHYSICS, Bd. 213, Nr. 10-11, 14. Juni 2012 (2012-06-14), Seiten 1132-1145, XP055158210, ISSN: 1022-1352, DOI: 10.1002/macp.201100573

## Beschreibung

Die vorliegende Erfindung betrifft die Herstellung und Verwendung eines Aktivmaterials für Batterien basierend auf kohlenstoffbeschichtetem Lithiumsulfid.

### Stand der Technik:

Anwendungen für Batterien, wie z.B. in Elektro-Fahrzeugen oder aber auch Speichertechnologien für erneuerbare Energien (z.B. Windenergie, Solarenergie, etc.) erfordern die Entwicklung neuer Technologien für wieder aufladbare Batterien mit deutlich höheren spezifischen Energien als sie bislang zur Verfügung stehen bzw. kommerziell erhältlich sind.

Die Lithium-Schwefel-Batterie stellt für diese Anwendungsbereiche eine sehr vielversprechende Technologie dar.

Entsprechend wurde im Stand der Technik versucht Aktivmaterialien auf Basis von Lithiumsulfid bereitzustellen. Aus der WO 2013/057023 ist es bekannt, Lithiumsulfid mit einer Kohlenstoffschicht zu umhüllen, wobei die Kohlenstoffschicht aus Polyacrylnitril oder Sucrose hergestellt wird.

Ferner wurden im Stand der Technik lithiumbasierte Systeme untersucht, die nicht auf Lithiumsulfid, sondern auf anderen Lithiumverbindungen beruhen. So geht z.B. aus L. Zhao et al., Adv. Mater. 2011, 23, 1385-1388 hervor, speziell Li₄Ti₅O₁₂ mit einer Kohlenstoffschicht zu umhüllen, wobei diese aus Ionischen Flüssigkeiten hergestellt wird. Die vorteilhaften Eigenschaften der Hülle werden dabei u.a. einer Interphasenbildung mit Ti zugeschrieben.

Auch Paraknowitsch et al., Macromol. Chem. Phys. 2012, 213, 1132-1145 beschreiben verschiedene Kohlenstoffmaterialien ausgehend von Ionischen Flüssigkeiten.

### Aufgabe:

Aufgabe der vorliegenden Erfindung ist es Aktivmaterialien für Batterien zur Verfügung zu stellen, die gegenüber den aus dem Stand der Technik bekannten Systemen verbesserte Eigenschaften aufweisen.

Demgemäß sollte unter anderem ein preiswertes, effektives und zuverlässiges Verfahren gefunden werden, Aktivmaterialien für Batterien herzustellen, insbesondere unter Berücksichtigung einer später möglichen großtechnischen Anwendung des Verfahrens.

Weiterhin war es Aufgabe entsprechend vorteilhafte Aktivmaterialien für Batterien, entsprechende Elektroden und Batterien selbst zur Verfügung zu stellen.

Zudem war es Aufgabe der vorliegenden Erfindung, entsprechende Verwendungen für die erfindungsgemäßen Aktivmaterialien zu finden.

Weitere Aufgabe der vorliegenden Erfindung war die Bereitstellung eines Kathodenmaterials, unter Zuhilfenahme der erfindungsgemäßen Aktivmaterialien.

### Lösung:

Diese Aufgabe wird durch das erfindungsgemäße Verfahren des Anspruches 1 und die Verwendung des nach Anspruch 1 hergestellten Aktivmaterials gemäß Anspruch 9 oder 10 gelöst.

### Begriffsdefinitionen:

Im Rahmen der vorliegenden Erfindung sind alle Mengenangaben, sofern nicht anders angegeben, als Gewichtsangaben zu verstehen.

Im Rahmen der vorliegenden Erfindung bedeutet der Begriff "Raumtemperatur" eine Temperatur von 20°C. Temperaturangaben sind, soweit nicht anders angegeben, in Grad Celsius (°C).

Sofern nichts anderes angegeben wird, werden die angeführten Reaktionen bzw. Verfahrensschritte bei Normaldruck/Atmosphärendruck, d.h. bei 1013 mbar, durchgeführt.

Sofern nicht anders angegeben, wurden/werden Größenangaben im Nanometerbereich oder Mikrometerbereich mittels Rasterelektronenmikroskopie (REM) bestimmt, bzw. sind so zu bestimmen.

Unter dem Begriff "ionische Flüssigkeit" werden im Rahmen der vorliegenden Erfindung ausschließlich aus Kationen und Anionen bestehende Flüssigkeiten verstanden. Diese weisen niedrige Schmelzpunkte von unter 100°C auf. Die ionischen Flüssigkeiten haben bei Raumtemperatur praktisch keinen Dampfdruck. Die Größe und die Symmetrie der beteiligten Ionen behindert dabei die Bildung eines starken Kristallgitters. Bereits geringe thermische Energie genügt daher, um die Gitterenergie zu überwinden und die feste Kristallstruktur aufzubrechen. Insbesondere werden im Rahmen der vorliegenden Erfindung unter ionischen Flüssigkeiten solche verstanden, die bei Temperaturen zwischen -10 und 80°C, insbesondere bei Raumtemperatur, flüssig sind. Im Rahmen der vorliegenden Erfindung werden Ionische Flüssigkeiten auch als IL abgekürzt.

### Detaillierte Beschreibung:

Gegenstand der vorliegenden Erfindung ist insbesondere ein Verfahren zur Herstellung eines Aktivmaterials für Batterien umfassend die folgenden Schritte a) bis e) oder bestehend aus diesen Schritten:
a) Vorlegen von Lithiumsulfid, bevorzugt Li₂S,
b) optional Trocknen und/oder Zerkleinern des Lithiumsulfids, insbesondere auf Größen von unter 2 µm, insbesondere kleiner als 1 µm,
c) Zugabe von mindestens einer ionischen Flüssigkeit, optional in einem geeigneten organischen Lösemittel, und Vermischen,
d) Erhitzen der Mischung unter Schutzgas auf eine Temperatur oberhalb der Zersetzungsgrenze der ionischen Flüssigkeit und unterhalb der Zersetzungstemperatur der Li₂S-Partikel, wodurch sich die mindestens eine ionische Flüssigkeit zu Kohlenstoff zersetzt und sich dieser als homogene Schicht auf der Oberfläche der Li₂S-Partikel abscheidet
e) optional Zerkleinern des erhaltenen Produktes um Agglomerate zu trennen.

Als Lithiumsulfid können im Rahmen der vorliegenden Erfindung sowohl Li₂Sₓ, mit x=2-8, als auch Li₂S einsetzt werden, bevorzugt ist Li₂S.
Dabei ist es vorteilhaft, wenn die durchschnittliche Teilchengröße des Lithiumsulfids kleiner als 2 µm, insbesondere kleiner als 1 µm, ist, um eine hohe spezifische Oberfläche zu erreichen.
Sofern das eingesetzte Lithiumsulfid bereits eine durchschnittliche Teilchengröße von kleiner als 2 µm, insbesondere kleiner als 1 µm, hat, ist ein Vermahlen nicht notwendig (aber dennoch möglich).

Das Trocknen des Lithiumsulfids erfolgt üblicherweise bei Temperaturen von 50 bis 150°C während 5 Stunden bis zu 2 Tagen und das Zerkleinern der Lithiumsulfid-Partikel durch Vermahlen, insbesondere mittels Kugelmühle und/oder durch manuelles Vermahlen. Bevorzugt geschieht das Vermahlen in Acetonitril, um einen Abrieb der Kugeln in der Kugelmühle zu verhindern.

Die zuzugebende Ionische Flüssigkeit muss so ausgewählt werden, dass sie sich beim Erhitzen unter Schutzgas bei einer Temperatur unterhalb der Schmelztemperatur des Lithiumsulfids zu Kohlenstoff zersetzt. Besonders geeignet sind dabei IL, die während dieses Vorganges zunächst polymerisieren, da dadurch die Beschichtung noch stabiler und homogener wird.
Vorteilhaft ist es dabei, wenn die eingesetzten IL stickstoffhaltige graphitische Kohlenstoffbeschichtungen ergeben.

Die im Rahmen der vorliegende Erfindung einsetzbaren IL weisen bevorzugt als Kationen solche auf, die Stickstoff enthalten, insbesondere ausgewählt aus der Gruppe bestehend aus Pyridinium, Pyridiniumderivate, Pyrrolidinium, Pyrrolidiniumderivate, Imidazolium, Imidazoliumderivate und/oder deren Gemischen. Derivate in diesem Zusammenhang sind mit Kohlenwasserstoffresten substituierte Basisverbindungen. Dabei können beispielsweise an den Stickstoffatomen der Basisverbindungen 1 oder 2 Alkylketten vorliegen, bevorzugt aus C₁- bis C₁₂-Alkanen, wobei die Alkylketten Heteroatome, wie insbesondere Sauerstoff, enthalten können; für den Fall das reine Alkylketten vorliegen ist es insbesondere bevorzugt, wenn diese eine Kettenlänge von 1 bis zu 6 Kohlenstoffatomen aufweisen.
Solche Derivate sind dem Fachmann bekannt.

Beispiele hierfür sind:
1-Butyl-3-methylimidazolium (BMIM),
1-Ethyl-3-Methylimidazolium (EMIM),
1-Butyl-1-methylpyrrolidinium (Pyr₁₄),
3-Methyl-N-butyl-pyridinium (3MBP),
1-Decyl-3-methylimidazolium (DMIM)
1-Hexyl-3-methylimodazolium (HMIM)
1-Cyanomethyl-3-methylimidazolium (MCNIM)
1,3-bis(Cyanomethyl)-Imidazolium (BCNIM)
N-(2-methoxyethyl)-N-methylpyrrolidinium(Pyr₁₂O₁).

Die im Rahmen der vorliegende Erfindung einsetzbaren IL weisen bevorzugt als Anionen solche auf, die Cyanofunktionalität(en) enthalten, insbesondere ausgewählt aus der Gruppe bestehend aus Dicyanamid, Tricyanomethanid, deren Derivate und/oder deren Gemischen. Derivate in diesem Zusammenhang sind mit Kohlenwasserstoffresten substituierte Basisverbindungen.

Bevorzugte IL im Rahmen der vorliegenden Erfindung sind solche ausgewählt aus der Gruppe bestehend aus:
1-Butyl-3-methylimidazolium Dicyanamid (BMIM DCA),
1-Ethyl-3-Methylimidazolium Tricyanomethanid (EMIM TCM),
1-Butyl-1-methylpyrrolidinium Tricyanomethanid (Pyr₁₄TCM),
3-Methyl-N-butyl-pyridinium Dicyanamid (3MBP DCA),
1-Ethyl-3-Methylimidazolium Dicyanamid (EMIM DCA),

Besonders bevorzugt werden erfindungsgemäß als Kationen 1-Butyl-3-methylimidazolium, 1-Ethyl-3-Methylimidazolium und/oder 1-Butyl-1-methylpyrrolidinium eingesetzt.

Besonders bevorzugt einsetzbare IL im Rahmen der vorliegenden Erfindung sind solche ausgewählt aus der Gruppe bestehend aus 1-Butyl-3-methylimidazolium Dicyanamid, 1-Ethyl-3-Methylimidazolium Tricyanomethanide, 1-Butyl-1-methylpyrrolidinium Tricyanomethanid und Mischungen davon, höchstbevorzugt EMIM TCM und/oder Pyr₁₄ TCM.

Gleichwohl ist es im Rahmen der vorliegenden Erfindung möglich in untergeordneten Mengen, d.h. unter 20%, bevorzugt unter 10%, insbesondere unter 5%, höchst bevorzugt unter1 %, IL mitzuverwenden, die nicht die oben genannten Kationen und/oder Anionen aufweisen. Als Beispiele seien genannt: Bistrifuoromethylsulfonylimid (Tf₂N) oder Bis(perfluoroethylsulfonyl)imid (BETI) und, weniger bevorzugt, Halogenidanionen (Cl⁻, Br⁻, F⁻, insbesondere Cl⁻). Bevorzugt ist es, diese nicht einzusetzen.

Den IL kann dabei gegebenenfalls in einem üblichen organischen Lösemittel zugegeben werden. Vorzugsweise sollten die organischen Lösemittel leicht verdampfen und eine niedrige Viskosität aufweisen.
Bevorzugt werden als organische Lösemittel hierfür solche ausgewählt aus der Gruppe bestehend aus Acetonitril, N-Methylpyrrolidon (NMP), 1,3-Dioxolan, Dimethylether (DME), DME-Derivate, insbesondere solche mit einer oder mehreren eingefügten Ethoxygruppen, wie Triethylengylgol-dimethylether (TEGDME), C₆-C₁₂-Alkane und Gemischen davon, bevorzugt Acetonitril, eingesetzt.

Diese gegebenenfalls verwendbaren Lösemittel können dabei in Massen-Verhältnis von Lösemittel:IL 1:1 bis 50:1, insbesondere 5:1 bis 15:1, eingesetzt werden.

Zur Zersetzung der Kohlenstoffverbindungen zum Kohlenstoff werden diese unter Schutzgas, bevorzugt Helium, Neon, Argon oder Stickstoff, insbesondere bevorzugt Argon, für 2 bis 5 Stunden, bevorzugt 3 Stunden auf eine Temperatur von bis zu 850°C, bevorzugt 550°C bis 750°C, erhitzt.
Die Aufheizung zur Zersetzungstemperatur kann dabei die Beschichtungsbildung beeinflussen und stellt demgemäß eine Möglichkeit dar, die Bildung der Kohlenstoffhülle zu steuern.
Aus praktischen Gründen wird oft eine Temperaturanstieg von ungefähr 2 bis 4°C/Minute, insbesondere 3°C/Minute, gewählt.
In einer Variante der vorliegenden Erfindung kann zunächst mit 2,5°C pro Minute bis 300°C und anschließend mit 3,3°C pro Minute bis zur Endtemperatur aufgeheizt werden.

Bevorzugt wird zunächst auf 250 bis 350°C aufgeheizt und dann für 0,5 bis 3 Stunden bei dieser Temperatur gehalten und danach auf bis zu 850°C, bevorzugt 550 bis 750°C, erhitzt und die Temperatur für 2 bis 5 Stunden, bevorzugt 3 Stunden, bei dieser Temperatur gehalten.

Das Aufheizen bzw. Halten bei der Temperatur kann in fachbekannten Öfen erfolgen, bevorzugt in Rohrofen.

Die derart dargestellten mit einer Kohlenstoffschicht ummantelten Lithiumsulfid-Partikel können dann zu Elektroden weiterverarbeitet werden. Ein entsprechendes Verfahren ist ebenfalls Gegenstand der vorliegenden Erfindung und umfasst die Schritte i) bis iv) oder besteht aus diesen:
i) Vorlegen eines gemäß dem oben beschriebenen erfindungsgemäßen Verfahren hergestellten Aktivmaterials,
ii) Zusetzen mindestens eines elektronisch leitfähigen Additivs, gegebenenfalls unter Zugabe mindestens eines geeigneten Binders,
iia) optional Zugabe weiterer Zusatzstoffe,
iii) Vermischen der Materialien,
iv) Verarbeitung der resultierenden Mischung, bevorzugt durch Ziehen und/oder Casten,
v) Trocknung des erhaltenen Materials,
wobei in den Schritten i) bis iv) bevorzugt ein Lösemittel verwendet wird, insbesondere bevorzugt NMP.

Das Ziehen der Elektrode in Schritt iv) ist ein mechanisches Verfahren, bei dem eine dünne Schicht des Slurry auf einen Stromableiter ausgetragen wird. Dies kann mit einem Rakel/Filmziehrahmen, der über die Folie gezogen wird erfolgen (z.B. im Laborbetrieb), oder der Slurry wird mit auf die sich bewegende Folie aufgetragen (z.B. im großtechnischen Maßstab).
Das Casten in Schritt iv) ist ein mechanisches Verfahren, dass auch als Schlitzgiessen bezeichnet werden kann. Dabei wird ein definierter Feedstrom durch Kavitäten und einen Schlitz homogenisiert und schonend laminar in einem Spalt auf den Ableiter aufgelegt.
Im übrigen sind beide Verfahren dem Fachmann bekannt.

Beispiele für einsetzbare elektronisch leitfähige Additive sind z.B. kohlenstoffhaltige Materialien.
Bevorzugt einsetzbare kohlenstoffhaltige Materialien sind ausgewählt aus der Gruppe bestehend aus Ruß, synthetischem oder natürlichem Graphit, Graphen, Kohlenstoffnanopartikeln, Fullerenen oder Mischungen davon.
Ein verwendbarer Ruß ist beispielsweise unter der Bezeichnung Ketjenblack^{(R)} erhältlich.
Ein bevorzugt verwendbarer Ruß ist beispielsweise unter der Handelsbezeichnung Super P^{(R)} C65 erhältlich.

Die kohlenstoffhaltigen Materialien können eine mittlere Partikelgröße im Bereich von 1 nm bis 500 µm, bevorzugt 5 nm bis 1 µm, besonders bevorzugt 10 nm bis 60 nm, aufweisen.

Geeignete Binder sind Polyacrylnitril (PAN), Polymethylmethacrylat (PMMA), Polyethylenoxid (PEO), Cellulose, Cellulosederivate Poly(vinylidendifluoridhexafluoropropylen)-Copolymer (PVdF-HFP), Polytetrafluoroethylen (PTFE), Styrol-Butadien-Kautschuk (SBR) und Polyvinylidenfluorid (PVdF).
Bevorzugt werden im Rahmen der vorliegenden Erfindung Polyvinylidenfluorid (PVdF), PAN und/oder PEO, insbesondere bevorzugt PAN, als Binder eingesetzt.
Bevorzugt werden die Binder vor Verwendung in dem Verfahren in einem Lösemittel gelöst, bevorzugt dem gleichen, wie in Schritten i) bis iv) verwendet, insbesondere in NMP.

Weitere Zusatzstoffe können beispielsweise beschichtete Lithiumpulver sein. Diese können als Lithium-Reservoir dienen, um einen anfänglichen irreversiblen Verlust an Lithium des eigentlichen Aktivmaterials auszugleichen. Normalerweise kann aber auf die Zugabe weiterer Zusatzstoffe verzichtet werden.

Die Aktivmaterialien können dabei mit dem mindestens einen elektronisch leitfähigen Additiv und dem mindestens einen geeigneten Binder in üblichen Verhältnissen gemischt werden.

In einer Variante der vorliegenden Erfindung beträgt das Gewichts-Verhältnis Aktivmaterial:Additiv:Binder 4:4:2. In einer weiteren Variante beträgt das Verhältnis 4:5:1.
In einer weiteren Variante kann der Anteil des Aktivmaterials deutlich erhöht werden.

Das so hergestellte Kathodenmaterial kann dann in fachüblicher Weise zu einer Elektrode verarbeitet werden.

Beispielsweise kann es auf Aluminium-, Nickel-, oder Al/Ni-Folie aufgetragen werden, die als Stromabnehmer dienen.
Gleichwohl sind auch weitere fachüblich bekannte Stromabnehmer verwendbar.

Im Rahmen der vorliegenden Erfindung können als Elektrolyte sämtliche dem Fachmann bekannte Elektrolyte verwendet werden, umfassend organische Elektrolyte beinhaltend dem Fachmann bekannte Lithium enthaltende Leitsalze, sowie ionische Flüssigkeiten beinhaltend Leitsalze wie bspw. Lithiumbis(fluorosulfonyl)imid (LiFSI) oder Lithium-bis(trifluoromethansulfonyl)imid (LiTFSI) in 1-Butyl-1-methylpyrollidinium-bis(trifluoromethansulfonyl)imid (PYR₁₄TFSI), Polymer-Elektrolyte beinhaltend Leitsalze wie bspw. Polyethylenoxid (PEO) beinhaltend LiTFSI (und optional PYR₁₄TFSI) sowie optional flüssige organische Elektrolyte wie bspw. LiCF₃SO₃ in TEGDME, LiPF₆ in beliebigen Mischungen aus Ethylencarbonat (EC) / Dimethylcarbonat (DMC) / Diethylcarbonat (DEC) / Propylencarbonat (PC) sowie LiTFSI oder LiPF₆ oder LiBF₄ in einer Mischung aus Dimethoxyethan (DME) und 1,3-Dioxolan (DOL) oder ionische Flüssigkeiten, Festkörper-Elektrolyte und beliebige Kombinationen.
Bevorzugt können solche ausgewählt aus der Gruppe bestehend Lithiumbis(fluorosulfonyl)imid oder Lithium-bis(trifluoromethansulfonyl)imid in 1-Butyl-1-methylpyrollidinium-bis(trifluoromethansulfonyl)imid, Polyethylenoxid beinhaltend LiTFSI, Polyethylenoxid beinhaltend LiTFSI und PYR₁₄TFSI, LiCF₃SO₃ in TEGDME, LiPF₆ in beliebigen Mischungen aus Ethylencarbonat/ Dimethylcarbonat/Diethylcarbonat/Propylencarbonat, LiTFSI in Dimethoxyethan/1,3-Dioxolan, LiPF₆ in Dimethoxyethan/1,3-Dioxolan, LiBF₄ in Dimethoxyethan/1,3-Dioxolan, LiCF₃SO₃, in 3:7 Tetraethylenglykoldimethylether (TEGDME)/1,3-Dioxolan und Gemischen davon eingesetzt werden.
Ein beispielhafter Elektrolyt ist LiCF₃SO₃, in 3:7 Tetraethylenglykoldimethylether (TEGDME)/1,3-Dioxolan.

Besonders bevorzugt wird Pyr₁₄TFSI mit LiTFSI (9:1) verwendet.

Im Rahmen der vorliegenden Erfindung können als Separatoren solche ausgewählt aus der Gruppe bestehend aus Polyethylen- und/oder Polypropylen-basierten Separatoren, Glasfaser-basierten Separatoren, keramischen Separatoren, Cellulose-basierten Separatoren und Gemischen bzw. Kombinationen davon eingesetzt werden.
Im Falle von Polymer- sowie Festkörper-Elektrolyten können diese gleichzeitig auch als Separator dienen.
Bevorzugt wird ein Einlagen-Polypropylenseparator, wie er z.B. als Celgard^{(R)} 2500 angeboten wird, oder, insbesondere bei Verwendung von auf IL basierenden Elektrolyten, keramische oder Glasfaser-basierte Separatoren eingesetzt.
Höchst bevorzugt werden einseitig beschichtete Separatoren, insbesondere einseitig mit PEO beschichtete PET-Separatoren, eingesetzt, wie sie in der DE 10 2013 105 678.8 beschrieben sind. In einer Variante ist es höchst bevorzugt mit Keramik beschichtete PET-Separatoren einzusetzen. Mit diesen Separatoren wurden besonders gute Ergebnisse erzielt.

Bevorzugt wird bei der erfindungsgemäßen Herstellung der Aktivmaterialien die Gegenwart von Wasser so weit wie möglich, bevorzugt durch Arbeit im Trockenraum und/oder unter Schutzgas, ausgeschlossen, da sich ansonsten Li₂O und H₂S bilden könnten.

Gegenstand der vorliegende Erfindung ist weiterhin die Verwendung des erfindungsgemäß hergestellten Aktivmaterials als Kathodenmaterial in Lithium-Metall- und/oder Lithium-Ionen Batterien.

Im Rahmen der vorliegenden Erfindung wurde für die elektrochemisch aktiven Partikel eine Art "Mikroreaktor" hergestellt, der den folgenden Anforderungen Rechnung trägt:
- Verhinderung einer Diffusion der löslichen Polysulfide zur Kathodenoberfläche bzw. zur Anodenseite und dortiger Abscheidung (Passivierung und "Shuttle-Mechanismus").
- Eine Verhinderung der Partikel-Agglomeration während der Lade- und Entlade-Vorgänge.
- Sicherstellung des elektronischen Kontakts zum Stromabnehmer. Gleichzeitig wurde im Rahmen der vorliegenden Erfindung sichergestellt, dass die "Hülle" dieses Mikroreaktors für Lithium-Ionen durchlässig ist, um den Transport der Lithium-Ionen zum Aktivmaterial zu gewährleisten.
Zudem wurden die bekannten Volumenänderungen durch die Lithiierung und Delithiierung berücksichtigt.

Für die "Reaktorhülle" wurde Kohlenstoff verwendet, da dieser über eine hohe elektronische Leitfähigkeit verfügt und die langkettigen löslichen Polysulfide im Innern des "Reaktors" hält, jedoch gleichzeitig für die Lithium-Ionen durchlässig ist.

Im Rahmen der vorliegenden Erfindung wurde gefunden, dass es möglich ist, eine sehr homogene Umhüllung von Lithiumsulfid zu erhalten, indem erstmals statt fester Precursor-Substanzen flüssige, in Form der IL, eingesetzt wurden.

Die erfindungsgemäßen Beschichtungen sind in der Lage die volumetrischen Änderungen während Batteriezyklisierungen ohne Schaden zu nehmen zu überstehen.

Zudem wird erfindungsgemäß eine vergleichsweise dünne Beschichtung des Lithiumsulfids erreicht, die aber dennoch in der Lage ist die gestellten Anforderungen zu erfüllen.

Durch die Verwendung von Stickstoff enthaltenden IL kann erfindungsgemäß eine "Dotierung" der Beschichtung erzielt werden, welche die elektrischen Eigenschaften erheblich verbessert, insbesondere kann sich die Leitfähigkeit signifikant erhöhen. Der Anteil des Stickstoffs kann dabei durch die Endtemperatur beeinflusst werden.
Die erzielten Ergebnisse bei der Verwendung des erfindungsgemäß hergestellten Aktivmaterials sind denen von vergleichbaren Aktivmaterialien überlegen.
Mit den erfindungsgemäßen Zellen kann eine hohe Effizienz erreicht werden; der Shuttle Effect kann auch ohne Additiv-Zugabe unterdrückt werden.

Durch Zyklisiertests konnte gezeigt werden, dass mit der vorliegende Erfindung ein stabiles Zyklisieren möglich ist.
Mit der vorliegende Erfindung konnten Aktivmaterialien erhalten werden, deren Beschichtung gleichmäßiger und homogener ist als bei den Materialien des Standes der Technik.
Zudem zeigt sich, dass die Kapazität der erfindungsgemäßen Zellen deutlich langsamer sinkt als bei denjenigen gemäß Stand der Technik.

Bei den erfindungsgemäßen Batterien werden nicht nur lediglich geringe Mengen an Elektrolyt benötigt, welches die Kosten für eine Batterie maßgeblich beeinflusst, sondern eine Verwendung nur geringer Mengen verbessert zudem noch überraschenderweise die Performance einer solchen Batterie, im Sinne einer gesteigerten spezifischen Kapazität, einer höheren Effizienz sowie einer verbesserten Zyklen-Stabilität.
Das erfindungsgemäße Verfahren ist ein insgesamt kostengünstiges.
Das erfindungsgemäße Verfahren ist leicht auf großtechnische Maßstäbe übertragbar.

Von der vorliegenden Erfindung umfasst ist auch die Verwendung der mittels dem erfindungsgemässen Verfahren hergestellten Aktivmaterialien in Elektroden und/oder Batterien. Die durch das spezielle Vorgehen der vorliegenden Erfindung erhaltene Schicht von Kohlenstoff auf der Oberfläche der elektrochemisch aktive Partikel stellt eine homogene, gleichmäßige und geschlossene Beschichtung dar, welche zu im Gegensatz zum Stand der Technik verbesserten Eigenschaften führt.

Die verschiedenen Ausgestaltungen der vorliegenden Erfindung, z.B. r diejenigen der verschiedenen abhängigen Ansprüche, können dabei in beliebiger Art und Weise miteinander kombiniert werden.
Die Erfindung wird nun unter Bezugnahme auf die folgenden nicht-limitierenden Beispiele erläutert.

### Figurenbeschreibung:

Figur 1 zeigt TGA-Messungen von drei erfindungsgemäß einzusetzenden IL.
Figur 2 zeigt entsprechende TGA-Messungen zu Materialien des Stand der Technik (WO 2013/057023), wobei links Polyacrylnitril und rechts Saccharose abgebildet ist.
Figur 3 zeigt REM Aufnahmen von einem erfindungsgemäß Aktivmaterial, bei dem Li₂S mit EMIM TCM im Verhältnis 5:1 beschichtet wurde.

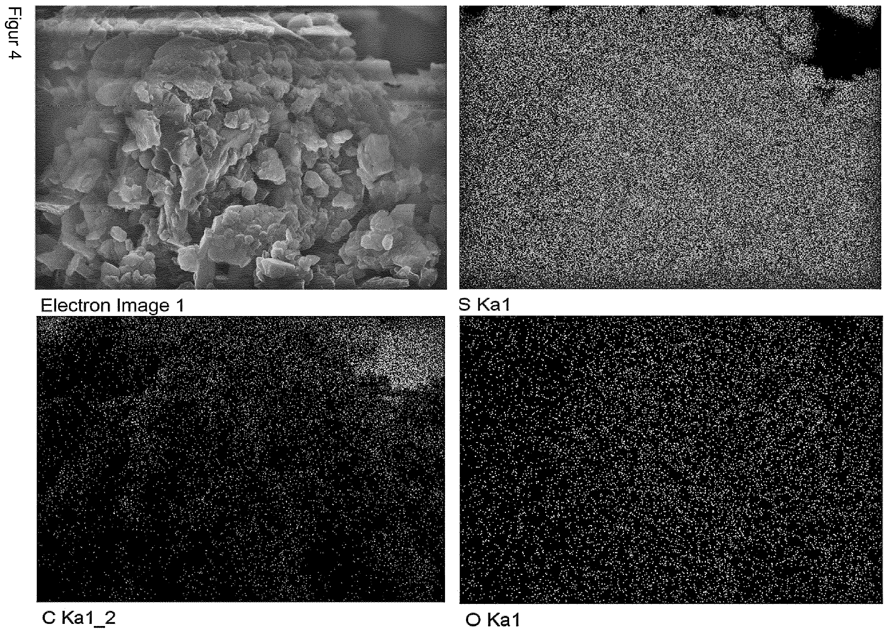

Figur 4 zeigt EDX Mapping des in Figur 3 gezeigten erfindungsgemäßen Aktivmaterials. Links oben eine REM-Aufnahme der Partikel, rechts oben Schwefel, links unten Kohlenstoff und rechts unten Sauerstoff.
Figur 5 zeigt einen Zyklisiertest mit einem erfindungsgemäß Aktivmaterial.
Figur 6 zeigt REM-Aufnahmen von auf Basis von PAN beschichtetem Li₂S.
Figur 7 zeigt REM-Aufnahmen von auf Basis von EMIM-TCM beschichtetem Li₂S.
Figur 8 zeigt einen Zyklisiervergleich der Elektroden ausgehend von Beschichtungen auf Basis von PAN bzw. EMIM-TCM.
   Abszisse: Zyklennummer
   Ordinate: spezifische Kapazität [mAh/g Li₂S]
   bei Zyklus-Nr. 0 obere Kurve (rot): PAN,
   bei Zyklus-Nr. 0 untere Kurve (grün): EMIM-TCM
Figur 9
   Abszisse: Kapazität [mAh]
   Ordinate: Spannung [V]
   kurze Kurven (Kapazität ca. 0 bis 60 mAh) (rot): PAN,
   lange Kurven (Kapazität ca. 0 bis größer 600 mAh) (grün): EMIM-TCM

### Beispiele:

### Beispiel 1 - Herstellung verschiedener erfindungsgemäßer Aktivmaterialien:

Es wurde ein Aktivmaterial hergestellt, wobei zuerst 1-2 Gramm Li₂S vorgelegt und in Gegenwart von Acetonitril in einer Kugelmühle zerkleinert, um die Sekundärpartikel aufzubrechen, und dann bei 120°C für 24 Stunden getrocknet wurde.

Anschließend wurde das Li₂S mit den aus Tabelle 1 ersichtlichen benetzt, indem die Mischung von IL bzw. IL/Acetonitril mit Li₂S in den angegebenen verschiedenen Verhältnissen für jeweils 30 Minuten gemörsert wurde.

Im nächsten Schritt erfolgte die Carbonisierung unter Schutzgasatmosphäre (Argon) indem zunächst bis auf 300°C aufgeheizt und diese Temperatur für 1 Stunden gehalten wurde. Dann wurde mit 2,5°C pro Minute auf auf 300°C und dann mit 3,3°C pro Minute bis auf 700°C aufgeheizt und für 3 Stunden die Temperatur gehalten.

Nach dem Abkühlen auf Zimmertemperatur wurde zum Trennen der Agglomerate gemörsert.

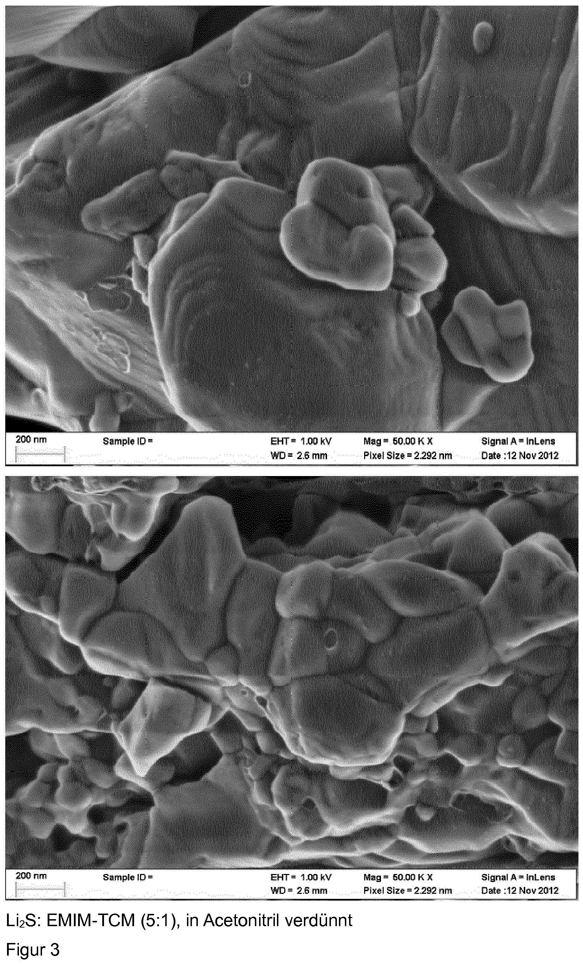

Das resultierende Material war schwarz, was ein Beleg dafür ist, dass das Lithiumsulfid vollständig umschlossen ist. Dies wird durch die REM-Bilder bestätigt (Figur 3).

**Tabelle 1**

| IL | Herstellung | Vorbehandlung | Li₂S : IL Verhältnis | Carbonisierung | Aussehen | C | H | N |
|---|---|---|---|---|---|---|---|---|
| -- | Li₂S | Vortrocknen 120°C für 24h | pur | 300C 1h | Pulver; weiss | 0.3 | 0 | 0 |
| | | | | 700C 3h | | | | |
| Pyr₁₄ TCM | simple mix | Vortrocknen 120°C für 24h | 1:1 Pyr₁₄ TCM | 300C 1h | Pulver; dunkel; Agglomerate | 16.25 | 0.06 | 9.88 |
| | | | | 700C 3h | | | | |
| EMIM TCM | simple mix | Vortrocknen 120°C für 24h | 3:2 EMIM TCM | 300C 1h | Pulver; dunkel; Agglomerate | 12.28 | 0.06 | 7.98 |
| | | | | 700C 3h | | | | |
| EMIM TCM | EMIM TCM + ACN (1:9) | Vortrocknen 120°C für 24h | 10:1 EMIM TCM | 300C 1h | dunkelgrau z.T. noch weiss | 1.41 | 0.04 | 0.77 |
| | | | | 700C 3h | | | | |
| EMIM TCM | EMIM TCM + ACN (1:9) | Vortrocknen 120°C für 24h | 5:1 EMIM TCM | 300C 1h | Pulver; dunkel; keine Agglomerate | 3.66 | 0.05 | 2.01 |
| | | | | 700C 3h | | | | |
| BMIM DCA | BMIM DCA + ACN (1:9) | Vortrocknen 120°C für 24h | 5:1 BMIM DCA | 300C 1h | Pulver; hellgrau; etwas weiss | / | / | / |
| | | | | 700C 3h | | | | |
| BMIM DCA | BMIM DCA + ACN (1:9) | Vortrocknen 120°C für 24h | 2:1 BMIM DCA | 300C 1h | Pulver; grau, z.T noch weiss | / | / | / |
| | | | | 700C 3h | | | | |

Die beste Beschichtung ergab sich, wenn Li₂S im Massen-Verhältnis 5:1 mit EMIM TCM beschichtet wurde, wobei vorher die Ionische Flüssigkeit im Massen-Verhältnis 9:1 mit Acetonitril verdünnt wurde.

Mittels EDX Mapping konnte festgestellt werden, dass die erfindungsgemäßen Aktivmaterialien eine gleichmäßige Verteilung von Schwefel und Kohlenstoff zeigen. Mithin weisen die erfindungsgemäßen Aktivmaterialien eine gleichmäßige Beschichtung auf.

Die Elementanalyse für EMIM TCN (5:1) ergab ca. 5-6% C- und N-Anteil. Dies deckt sich mit TGA-Tests aus Beispiele 1b), die ergaben, dass EMIM TCN bis 700°C etwa zwei Drittel seines Gewichts einbüßt.

### Beispiele 1a - 1c - Herstellung der Aktivmaterialien:

Es wurde wie in Beispiel 1 allgemein beschrieben vorgegangen, wobei die folgenden IL verwendet wurden:
BMIM DCA aus Tabellenzeile 6 (Beispiel 1a - Verhältnis Li₂S:IL = 5:1),
EMIM TCM aus Tabellenzeile 5 (Beispiel 1b - Verhältnis Li₂S:IL = 5:1),
Pyr₁₄TCM aus Tabellenzeile 2 (Beispiel 1c -Verhältnis Li₂S:IL = 1:1).

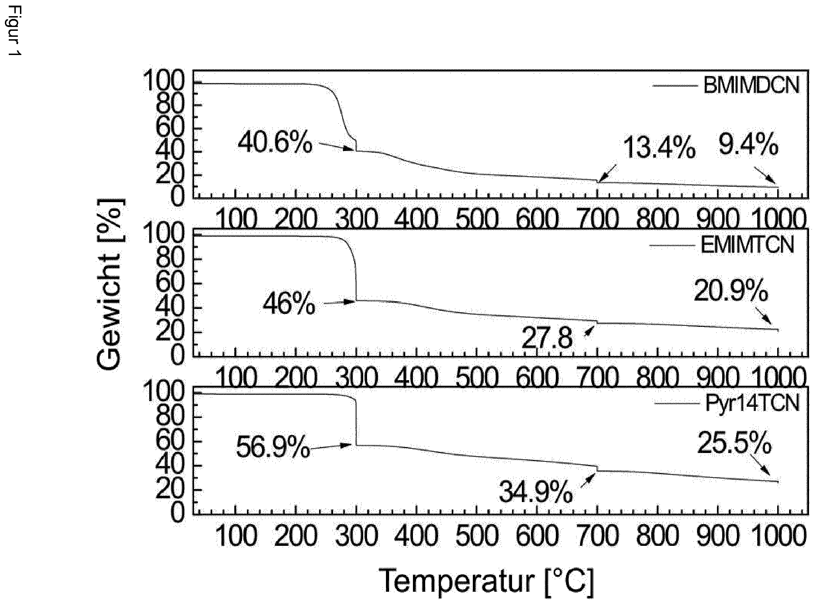

Im direkten Vergleich der Beispiele 1a bis 1c zeigte sich, das EMIM TCM und Pyr₁₄TCM im Vergleich zu BMIM DCA zu einer höheren Ausbeute an Kohlenstoff führen. EMIM TCM und Pyr₁₄TCM im Vergleich zu BMIM DCA verlieren bis 700°C ca. 2/3 der Masse, BMIM DCA deutlich mehr. Dazu wurden Thermogravimetrische Messungen (TGA) durchgeführt. Dazu wurde die jeweilige Probe unter Inertgas erhitzt und der Gewichtsverlust in Abhängigkeit von der Temperatur gemessen.(Figur 1)

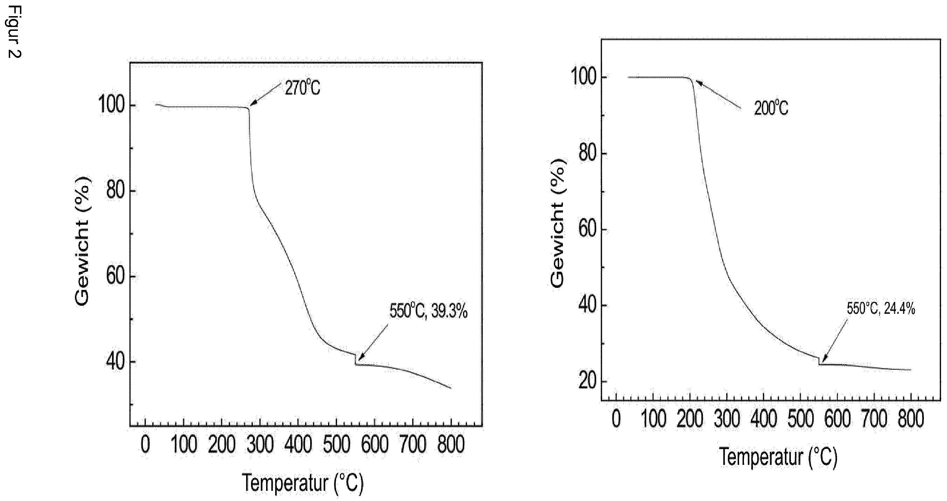

Es wurden entsprechende TGA-Untersuchungen mit den Aktivmaterialien gemäß WO 2013/057023 durchgeführt (Figur 2).

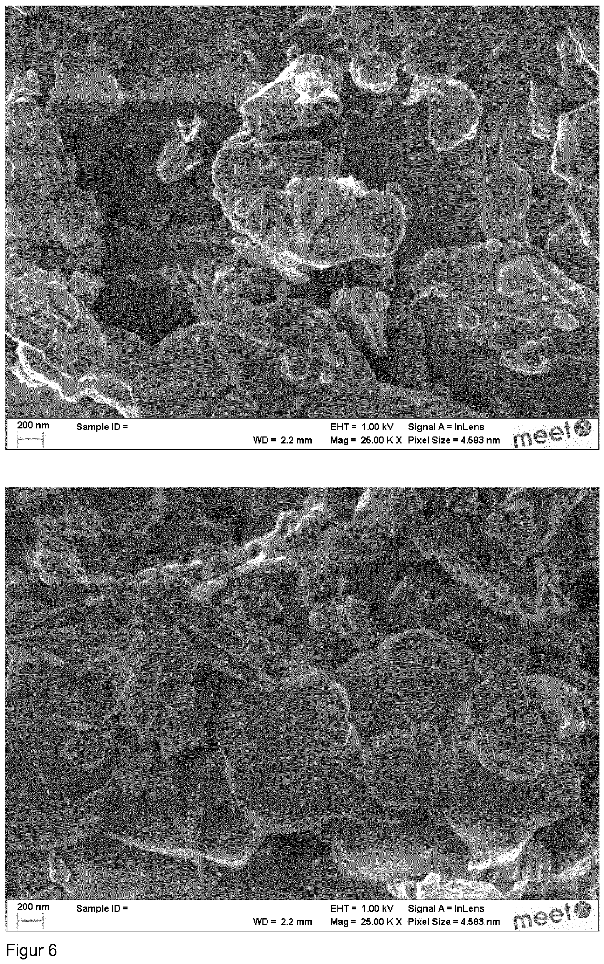

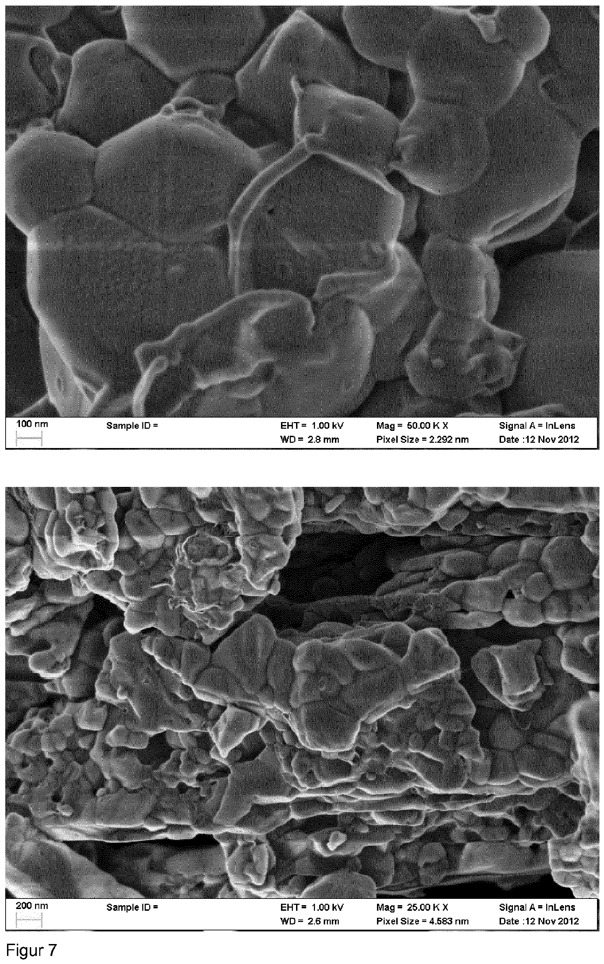

Es wurden von mit auf Basis von EMIM-TCM (Figur 7) bzw. mit PAN (Figur 6) hergestelltem beschichtetem Li₂S REM-Aufnahmen gemacht. Es zeigt sich, dass mit EMIM-TCM homogenere, dichtere Beschichtungen der Li₂S-Partikel erzielt werden.

### Beispiel 2 - Herstellung einer Elektrode:

Es wurden jeweils 40 g der in Beispiel 1 hergestellten Aktivmaterialien mit 40 g Super P^{(R)} Li und 20 g 105-iger PVdF-Lösung in einem Mischer (Kugelmühle) bei 200 bis 400 Umdrehungen pro Minute für eine Stunde vermischt, dann wurde 10 Minuten pausiert. Dies wurde dreimal wiederholt.

Die erhaltenen Produkte wurden für 24 Stunden bei Zimmertemperatur im Trockenraum getrocknet und anschließend nochmals für 2 Stunden bei 60°C, für 2 Stunden bei 80°C und für 2 Stunden bei 100°C.

Die resultierende Mischung wurde auf eine Aluminiumfolie gezogen (Schichtdicke nass: 130 µm) und 24 Stunden bei leichtem Unterdruck und Raumtemperatur sowie 48 Stunden unter Vakuum bei 100°C getrocknet.

Mit den getrockneten Kathodenmaterialien wurden Elektroden hergestellt, indem die Bestandteile in einer "pouch bag" angeordnet wurden. Dabei wurden Al/Ni-Spannungskollektoren, als Elektrolyt Pyr₁₄TFSI:LiTFSI (9:1) und als Separator Celgard^{(R)} 2500 verwendet.

### Beispiel 3a - Herstellung eines Aktivmaterials gemäß Stand der Technik:

Es wurde wie in Beispiel 1 der WO 2013/057023 vorgegangen.

### Beispiel 3b - Herstellung einer Elektrode gemäß Stand der Technik (Vergleich):

Es wurde wie in Beispiel 2 vorgegangen, nur dass als Aktivmaterial das des Beispiels 3a verwendet wurde.

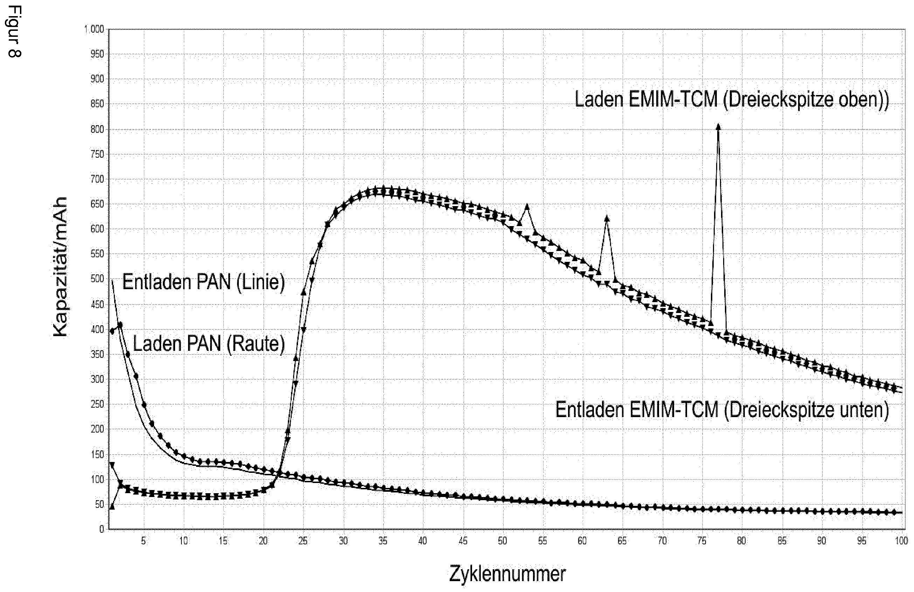

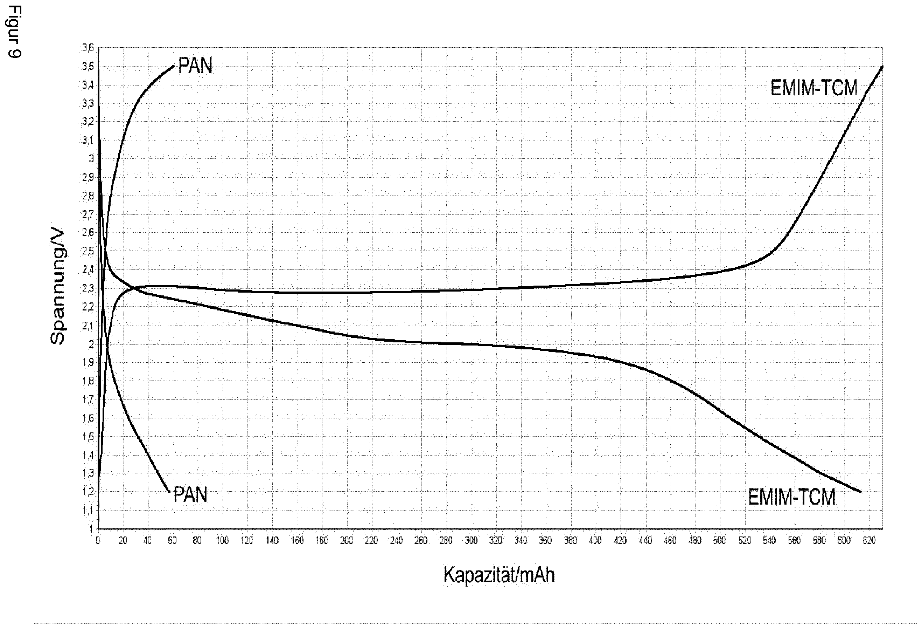

Mit den gemäß Beispiel 2 und Beispiel 3 (Vergleich) hergestellten Elektroden wurden Messungen durchgeführt, deren Ergebnisse in den Figuren 8 und 9 dargestellt sind.

Es zeigt sich im Vergleich, dass die Kapazität der erfindungsgemäßen Zellen deutlich langsamer sinkt.

### Beispiel 4: Zyklisiertest mit erfindungsgemäßem Aktivmaterial:

Es wurde analog zu Beispiel 2 vorgegangen.

Als Elektrode wurde Li₂S/C EMIM-TCM:SuperP:PVdF (40:20:20) eingesetzt (PVdF = Polyvinylidenfluorid).

Der Separator war ein Polyethylenoxid-beschichteter Separion Separator und als Elektrolyt wurde Pyr₁₄TFSI LiTFSI (9:1) eingesetzt.

Die Testzelle war ein Pouchbag bei 40°C.

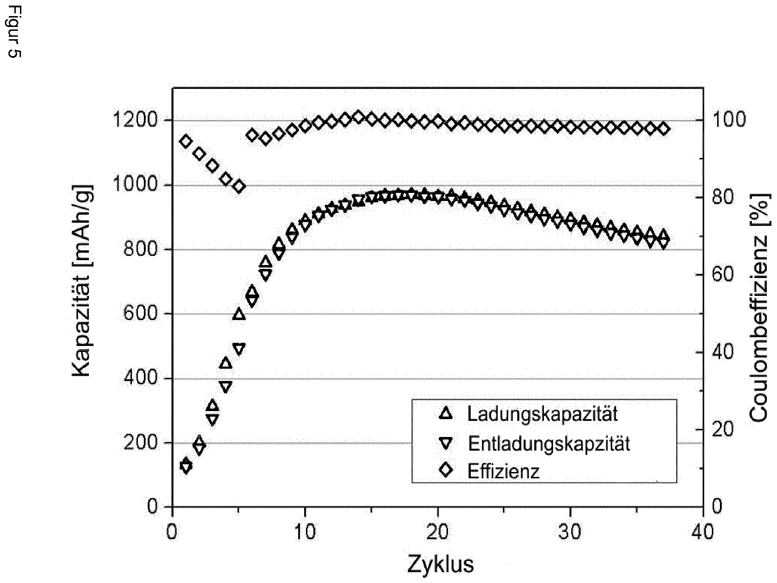

Das Ergebnis ist in Figur 5 dargestellt.

Dabei ist zu entnehmen, dass eine hohe Effizienz erreicht wurde; der Shuttle Effect wurde ohne Additiv-Zugabe unterdrückt.

## Patentansprüche

1. Verfahren zur Herstellung eines Aktivmaterials für Batterien umfassend die folgenden Schritte a) bis e) oder bestehend aus diesen Schritten:
a) Vorlegen von Lithiumsulfid,
b) optional Trocken und/oder Zerkleinern des Lithiumsulfid,
c) Zugabe von mindestens einer ionischen Flüssigkeit, optional in einem geeigneten organischen Lösemittel, und Vermischen,
d) Erhitzen der Mischung, gegebenenfalls unter Schutzgas, auf eine Temperatur oberhalb der Zersetzungsgrenze der ionischen Flüssigkeit und unterhalb der Zersetzungstemperatur der Lithiumsulfid-Partikel, wodurch sich die mindestens eine ionische Flüssigkeit zu Kohlenstoff zersetzt und sich dieser als homogene Schicht auf der Oberfläche der Lithiumsulfid-Partikel abscheidet
e) optional Zerkleinern des erhaltenen Produktes um Agglomerate zu trennen.

2. Verfahren nach Anspruch 1, **dadurch gekennzeichnet, dass** das Lithiumsulfid Li₂S ist.

3. Verfahren gemäß Anspruch 1 oder 2, **dadurch gekennzeichnet, dass** in Schritt b) das Trockenen bei Temperaturen von 50 bis 150°C während 5 Stunden bis zu 2 Tagen erfolgt und/oder das Zerkleinern der Lithiumsulfid-Partikel durch Vermahlen, insbesondere mittels Kugelmühle und/oder durch manuelles Vermahlen.

4. Verfahren gemäß einem der Ansprüche 1 bis 3, **dadurch gekennzeichnet, dass** die mindestens eine ionische Flüssigkeit
als Kation ein stickstoffhaltiges Kation, bevorzugt ausgewählt aus der Gruppe bestehend aus Pyridinium, Pyridiniumderivaten, Pyrrolidinium, Pyrrolidiniumderivaten, Imidazolium, Imidazoliiumderivaten und deren Gemischen, besonders bevorzugt ausgewählt aus 1-Butyl-3-methylimidazolium, 1-Ethyl-3-Methylimidazolium und 1-Butyl-1-methylpyrrolidinium, aufweist und
als Anion ein Anion ausgewählt aus der Gruppe bestehend aus Dicyanamid, Tricyanomethanid und Gemischen davon, bevorzugt Tricyanoamethanamid aufweist.

5. Verfahren gemäß einem der Ansprüche 1 bis 4, **dadurch gekennzeichnet, dass** die mindestens eine ionische Flüssigkeit aus der Gruppe bestehend aus 1-Butyl-3-methylimidazolium Dicyanamid, 1-Ethyl-3-Methylimidazolium Tricyanomethanide, 1-Butyl-1-methylpyrrolidinium Tricyanomethanid und Mischungen davon ausgewählt wird.

6. Verfahren gemäß einem der Ansprüche 1 bis 5, **dadurch gekennzeichnet, dass** als Lösungsmittel Acetonitril und/oder N-Methylpyrrolidon, bevorzugt Acetonitril, eingesetzt wird.

7. Verfahren gemäß einem der Ansprüche 1 bis 6, **dadurch gekennzeichnet, dass** in Schritt d) auf bis zu 850°C, bevorzugt 550 bis 750°C, erhitzt und die Temperatur für 2 bis 5 Stunden, bevorzugt 3 Stunden, bei dieser Temperatur gehalten wird.

8. Verfahren nach einem der Ansprüche 1 bis 7, **dadurch gekennzeichnet, dass** in Schritt d) zunächst auf 250 bis 350°C aufgeheizt und dann für 0,5 bis 3 Stunden bei dieser Temperatur gehalten wird und danach auf bis zu 850°C, bevorzugt 550 bis 750°C, erhitzt und die Temperatur für 2 bis 5 Stunden, bevorzugt 3 Stunden, bei dieser Temperatur gehalten wird.

9. Verwendung eines Aktivmaterials hergestellt nach einem der vorhergehenden Ansprüche in Elektroden und/oder Batterien.

10. Verwendung eines Aktivmaterials hergestellt nach einem der Ansprüche 1 bis 8 als Kathodenmaterial in Lithium-Metall- und/oder Lithium-Ionen-Batterien.

11. Verfahren zur Herstellung eines Kathodenmaterials, umfassend die Schritte
i) Vorlegen eines gemäß einem der Ansprüche 1 bis 8 hergestellten Aktivmaterials,
ii) Zusetzen mindestens eines elektronisch leitfähigen Additivs, gegebenenfalls unter Zugabe mindestens eines geeigneten Binders,
iia) optional Zugabe weiterer Zusatzstoffe,
iii) Vermischen der Materialien,
iv) Verarbeitung der resultierenden Mischung, bevorzugt durch Ziehen und/oder Casten,
v) Trocknung des erhaltenen Materials,
wobei in den Schritten i) bis iv) bevorzugt ein Lösemittel verwendet wird, insbesondere bevorzugt NMP.

12. Verfahren nach Anspruch 11, **dadurch gekennzeichnet, dass** es aus den Schritten i) bis v) besteht.

## Claims

1. A process for producing an active material for batteries which comprises the steps a) to e) below or consisting of these steps:
a) provision of lithium sulfide,
b) optionally drying and/or comminution of the lithium sulfide,
c) addition of at least one ionic liquid, optionally in a suitable organic solvent, and mixing,
d) heating of the mixture, optionally under protective gas, to a temperature above the decomposition temperature of the ionic liquid and below the decomposition temperature of the lithium sulfide particles, as a result of which the at least one ionic liquid decomposes to carbon and the latter deposits as homogeneous layer on the surface of the lithium sulfide particles,
e) optionally comminution of the resulting product to break up agglomerates.

2. The process as claimed in claim 1, **characterized in that** the lithium sulfide is Li₂S.

3. The process as claimed in claim 1 or 2, **characterized in that** in step b) drying is carried out at temperatures of from 50 to 150° C for from 5 hours up to 2 days and/or the comminution of the lithium sulfide particles is carried out by milling, in particular by means of a ball mill and/or by manual milling.

4. The process a claimed in any of claims 1 to 3, **characterized in that** the at least one ionic liquid has nitrogen-containing cation, preferably selected from the group consisting of pyridinium, pyridinium derivatives, pyrrolidinium, pyrrolidinium derivatives, imidazolium, imidazolium derivatives and mixtures thereof, more preferably selected of 1-butyl-3-methylimidazolium, 1-ethyl-3-methylimidazolium and 1-butyl-1-methylpyrrolidinium, as cation and as an anion selected from the group consisting of dicyanamide, tricyanomethanide and mixtures thereof, preferably tricyanoamethanamide, as anion.

5. The process as claimed in any of claims 1 to 4, **characterized in that** the at least one ionic liquid is selected from the group consisting of 1-butyl-3 - methyl imidazolium dicyanamide, 1-ethyl-3-methylimidazolium tricyanomethanide, 1- butyl-1-methyl pyrrolidinium tricyanomethanide and mixtures thereof.

6. The process as claimed in any of claims 1 to 5, **characterized in that** acetonitrile and/or N- methylpyrrolidone , preferably acetonitrile is used as solvent.

7. The process as claimed in any of claims 1 to 6, **characterized in that** in, step d), heating is carried out to up to 850°C, preferably from 550 to 750°C, and this temperature is maintained for from 2 to 5 hours, preferably 3 hours.

8. The process as claimed in any of claims 1 to 7, **characterized in that** in step d), heating is carried out firstly up to 250 to 350°C, and this temperature is then maintained for from 0,5 to 3 hours and then heating is carried out to up to 850°C, preferably from 550 to 750°C, and this temperature is maintained for from 2 to 5 hours, preferably 3 hours.

9. The use of an active material produced as claimed in any of the preceding claims in electrodes and/or batteries.

10. The use of an active material, produced as claimed in any of the claims 1 to 8, as cathode material in lithium metal-and/or lithium-ion -batteries.

11. A process for producing a cathode material, which comprises the steps
i) provision of an active material produced as claimed in any of claims 1 to 8.
ii) addition of at least one electronically conductive additive, optionally with addition of at least one suitable binder,
iia) optionally addition of further additives,
iii) mixing of the materials,
iv) processing of the resulting mixture, preferably by drawing and/or casting,
v) drying of the material obtained, where a solvent is preferably used in steps i) to iv), particularly preferably NMP.

12. Method of claim 11, **characterized in that** it consists of the steps i) to v).

## Revendications

1. Un procédé pour la production d'un matériau actif pour des batteries comprenant des mesures suivantes a) à e) ou consistant de cettes étapes:
a) soumettre de sulfure de lithium,
b) facultativement sécher et/ou broyer le sulfure de lithium,
c) ajouter au moins un liquide ionique, facultativement dans un solvant organique approprié, et mêler,
d) chauffer le mélange, facultativement sous gaz protectif, à une température au-dessus de la température de décomposition du liquide ionique et au-dessous de la température de décomposition des particules du liquide de sulfure de lithium, le au moins un liquide ionique se décomposant au carbon et le dernier se séparant sur la surface des particules de sulfure de lithium comme une couche homogène,
e) facultativement broyer le produit résultant pour séparer l'agglomérat.

2. Le procédé selon la revendication 1, **caractérisé en ce que** le sulfure de lithium est Li₂S.

3. Le procédé selon la revendication 1 ou 2, **caractérisé en ce que** dans l'étape b, le séchage est fait aux températures de 50 à 150° C pendant 5 heures jusqu'à 2 jours et/ou le broyant des particules du sulfure de lithium se déroule par moudrant, en particulier par un moulin à balle et/ou par moudre manuel.

4. Le procédé selon l'une des revendications 1 à 3, **caractérisé en ce que** le au moins un liquide ionique a comme cation un cation contenant nitrogène, préférablement choisi du groupe consistant de pyridinium, dérivés de pyridinium, pyrrolidinium, dérivés de pyrrolidinium, imidazolium, dérivés d' imidazolium et des mélanges de ceux-ci, de préférance choisi de 1-butyle-3-méthyleimidazolium, 1-éthyle-3-méthyle imidazolium et de 1-butyle-1-méthyle, et comme anion ayant un anion choisi du groupe consistant de dicyanamide, tricyanométhanide et des mélanges de ceux-ci, de préférance tricyanoaméthanamide.

5. Le procédé selon l'une quelconque des revendications 1 à 4, **caractérisé en ce que** le au moins un liquide ionique est choisi du groupe consistant de 1-butyle- 3-méthyle imidazolium dicyanamide, 1-éthyle-3-méthyleimidazolium tricyanomethanide, 1- butyle-1-méthyle pyrrolidinium tricyanomethanide et des mélanges de ceux-ci.

6. Le procédé selon l'une quelconque des revendications 1 à 5, **caractérisé en ce que** acétonitrile et/ou N- méthyle pyrrolidone, préférablement acétonitrile est usé comme solution.

7. Le procédé selon l'une quelconque des revendications 1 à 6, **caractérisé en ce qu'** à l'étape d), le chauffage est effectué à jusqu'à 850°C, de préférance 550 à 750°C, et la température est maintenue à cette température pour 2 à 5 heures, de préférance à 3 heures.

8. Le procédé selon l'une quelconque des revendications 1 à 7, **caractérisé en ce qu'** à l'étape d), le chauffage est effectué au début à jusqu'à 250 à 350°C, et puis cette température est maintenue pour 0,5 à 3 heures et puis échauffée jusqu' à 850°C, de préférance 550 à 750°C, et la température est maintenue à cette température pour 2 à 5 heures, de préférance 3 heures.

9. Utilisation d'un matériau actif, produit selon l'une quelconque des revendications, dans des électrodes et/ou batteries.

10. Utilisation d'un matériau actif, produit selon l'une quelconque des revendications 1 à 8, comme matériau de cathode dans des batteries de lithium métal-et/ou batteries de lithium-ion.

11. Procédé pour la production de matériau de cathode, comprenant les étapes
i) soumettre d'un matériau actif produit selon l'une quelconque des revendications 1 à 8.
ii) addition d'un au moins un additif électroniquement conductif, facultativement avec l'addition d'un au moins un liant approprié,
iia) facultativement l' addition d'autres additifs,
iii) mélange des matériaux,
iv) traitement du mélange résultante de préférance en tirant et/ou coulant,
v) sécher le matériau résultant,
de préférance un solvant étant usé dans les étapes i) to iv), plus particulier de préférance NMP.

12. Procédé selon la revendication 11, **caractérisé en ce qu'**il comprends les étapes i) à v).
